# EUROPEAN PATENT APPLICATION

(11) **EP 4 763 011 A1**
(43) Date of publication of application: **24.06.2026**
(21) Application number: 24221621.6
(22) Date of filing: 19.12.2024
(51) Int. Cl.: A47J 36/32, A47J 43/04, A47J 43/07

(54) **METHOD AND CONTROL UNIT FOR OPERATING A KITCHEN APPLIANCE IN DEPENDENCE OF LENGTH INFORMATION**

(71) Applicant: BSH Hausgeräte GmbH, 81739 München (DE)
(72) Inventor: Brinovsek, Luka, 2259 Ivanjkovci (SI); Tostovrsnik, Miha, 3333 Ljubno ob Savinji (SI); Rupnik, David, 3222 Dramlje (SI)

(57) **Abstract**

A control unit (101) for a kitchen appliance (100) is described, wherein the kitchen appliance (100) comprises a drive unit (120) configured to drive a tool (107), and wherein the tool (107) is configured to produce a food item (200) having a length (201) that progressively increases during operation of the tool (107). The control unit (101) is configured to capture drive data (210) with regard to the drive unit (120) while driving the tool (107), using one or more sensors (131, 132, 133), and to determine length information with regard to the length (201) of the food item (200) produced by the tool (107) based on the drive data (210). Furthermore, the control unit (101) is configured to operate the kitchen appliance (100) in dependence of the length information.

## Description

The present document relates to a kitchen appliance. In particular, the present document relates to increasing the comfort-of-use of a kitchen appliance.

A kitchen appliance may be configured to process a food item which is placed in or above the receptacle of the appliance using one or more (possibly interchangeable) tools. Exemplary tools are a knife, a shredder, a dough hook, a slicing tool, a sausage maker, a pasta maker, a biscuit (cookie) maker etc. The kitchen appliance may comprise a user interface which enables a user to select an operation program and/or an operation parameter (such as the temperature of a heating unit and/or the rotational speed of a tool) of the kitchen appliance.

The kitchen appliance may be realized as a kitchen appliance (e.g. stand mixer) with a head unit, an upright support part and a base unit (pedestal). The head unit may be pivotable relative to the upright support part extending vertically from the base unit and supporting the head unit. An electric motor with or without a gear unit (together forming a drive unit) may be arranged in the head unit. An outlet for driving processing tools is positioned in the head unit above a receptacle (bowl). The outlet may be arranged on the upper or the lower side of the head unit or both in case of two or more outlets.

Such a kitchen appliance can be configured as a L-shaped kitchen appliance (stand mixer).

The present document addresses the technical problem of increasing the comfort-of-use of a kitchen appliance and/or the precision, with which food items may be processed and/or produced by a kitchen appliance. The technical problem is solved by each one of the independent claims. Preferred examples are described in the dependent claims.

According to an aspect, a control unit for a kitchen appliance (e.g., for a food processor and/or for a cooking appliance and/or for a stand mixer) is described. The kitchen appliance comprises a drive unit configured to drive a tool. The drive unit typically comprises an electric motor which is configured to cause the motor shaft of the motor to rotate (with a certain rotational speed). The motor shaft may be mechanically coupled to the tool (notably to the tool shaft of the tool), thereby causing the tool to rotate. By way of example, the motor shaft may be mechanically coupled to the tool shaft of the tool via a gear unit. The gear unit may exhibit a transmission ratio M, such that the rotational speed of the tool shaft and the rotational speed of the motor shaft are proportional to one another, wherein the proportionality factor is equal to the transmission ratio 1/M of the gear unit. The transmission ratio M is preferably greater than 1, notably greater than 5 or greater than 10, such that the rotational speed of the tool shaft is smaller than the rotational speed of the motor shaft (by the factor M).

The kitchen appliance, in particular the drive unit, may comprise one or more sensors, which are each configured to capture sensor data that is indicative of the operation of the drive unit (while driving the tool). The sensor data of the one or more sensors may be referred to herein as drive data or may be used to determine that drive data. The drive data may be indicative of
- the position of the motor shaft and/or of the tool shaft (as a function of time),
- the rotational speed of the motor shaft and/or of the tool shaft (as a function of time), and/or
- the electric power (notably the electric current) used for operating the motor of the drive unit while driving the tool (notably, when causing a rotation of the tool). The electric power, notably the motor current, may be provided as a function of time.

The tool may be configured to produce a food item having a length that progressively increases during operation of the tool. The tool may e.g. be configured to produce pasta or sausages or biscuits or any elongated food item The length of the food item that is produced by the tool may increase along with the duration of the operation of the tool. As indicated above, the tool, notably a component of the tool, may rotate during operation of the tool. Hence, the tool, notably the component of the tool, may travel a certain angular distance, wherein a full rotation of the tool typically corresponds to an angular distance of 360°. The length of the food item may increase along with the increase of the cumulated angular distance that is travelled by the tool (since start of operation of the tool). The tool may be such that there is a proportionality factor between the increase of the length of the food item which is caused by a given increase of the (cumulated) angular distance that is travelled by the tool. Hence, the tool may exhibit a tool-dependent characteristic, notably a proportionality factor, indicating the increase in length of a food item which is caused by a given increase of the (cumulated) angular distance travelled by the tool.

By way of example, a full rotation of the tool, i.e. an angular distance of 360°, may lead to an increase of the length of the food item that may be referred to as the "tool length" L. Hence, the characteristic, notably the proportionality factor, of the tool may be L/360°. If the tool has travelled a (cumulated) angular distance of d since start of operation of the tool, the total length I of the food item which has been produced by the tool may be calculated as I = L/360° * d.

The control unit is configured to capture drive data with regard to the drive unit while driving the tool, using the one or more sensors. As indicated above, the dive data may be indicative of
- the position and/or the rotational speed of the motor shaft and/or of the tool shaft (as a function of time); and/or
- the electric power (notably the motor current) used for operating the motor of the drive unit (as a function of time).

Furthermore, the control unit is configured to determine length information with regard to the length of the food item that has been produced by the tool, based on the drive data. The length information may be indicative of the cumulated length of the food item that has been produced by the tool (since start of operation of the tool and/or of the drive unit, and/or since the last interruption of operation of the tool and/or of the drive unit).

The kitchen appliance may comprise a control element (as part of the user interface) for activating the kitchen appliance, and/or for causing the drive unit to drive the tool. By way of example, the kitchen appliance may comprise a sensor which is configured to detect that the user presses the food item (which is placed within the item area) towards the tool. This may automatically cause the drive unit to start operation for driving the tool.

Furthermore, the drive unit is configured to operate the kitchen appliance in dependence of the length information. In particular, the control unit may be configured to output the length of the produced food item (i.e., the value of the length of the food item) via the user interface of the kitchen appliance. Alternatively, or in addition, the control unit may be configured to determine a target value for the length of the food item, which is to be produced (wherein the target value may have been set by the user via the user interface). Furthermore, the control unit may be configured to cause the drive unit to interrupt operating the tool in dependence of the length information and in dependence of the target value. In particular, the drive unit may be caused and/or triggered to interrupt operating the tool, if (e.g., as soon as) the length information indicates that the target value of the length of the produced food item has been or will be reached.

As a result of this, a particularly comfortable, efficient and precise operation of a kitchen appliance is provided. Furthermore, such a kitchen appliance brings added value functionality to a user wanting to make food items of a pre-determined length.

As indicated above, the drive unit may be configured to drive the rotation of the tool. In other words, the drive unit may cause the tool to rotate (about the rotational axis of the tool, which typically corresponds to the tool shaft). The tool may be configured to produce a certain tool length L of the food item within each full rotation of the tool (which typically corresponds to an angular distance of 360°).

The one or more sensors may be configured to capture drive data which is indicative of the number of rotations of the tool (notably of the tool shaft), which are caused by the drive unit. The control unit may be configured to capture the drive data using
- a position sensor (e.g., a Hall sensor) of the motor shaft which is driven by the motor of the drive unit, and/or
- a position sensor (e.g., a Hall sensor) of the tool shaft of the tool, which is driven by the motor shaft via the gear unit.

The one or more position sensors preferably exhibit an angular resolution with regard to the rotation of the tool and/or with regard to the rotation of the respective shaft, which is 10° or finer.

The control unit may be configured to determine the cumulated angular distance that has been travelled by the tool (since start of operation of the tool) based on the sensor data of the position sensor of the tool shaft of the tool, which indicates each full rotation of the tool. Alternatively, or in addition, the control unit may be configured to determine the cumulated angular distance that has been travelled by the tool (since start of operation of the tool) based on the sensor data of the position sensor of the motor shaft which is driven by the motor of the drive unit and which drives the tool shaft via a gear unit having a transmission ratio of M, with M>1. The cumulated angular distance may be determined in a particularly precise manner using the sensor data of both position sensors.

As indicated above, the position sensor of the motor shaft may exhibit an angular resolution of 10° of finer. Due to the use of a gear unit having a transmission ratio of M, this leads to an angular resolution for the tool shaft of 10°/M or finer. Hence, the control unit may be configured to determine the cumulated angular distance with an angular resolution of e.g. 2° or finer. As a result of this, the cumulated angular distance that has been travelled by the tool may be determined in a particularly precise manner.

The control unit may be configured to increase the length of the produced food item by (exactly) the tool length, for each full rotation of the tool indicated by the drive data. Furthermore, the control unit may be configured to increase the length of the produced food item by a fraction of the tool length, for a partial rotation of the tool indicated by the drive data. By doing this, the length may be updated in an efficient and precise manner.

In particular, the control unit may be configured to determine, based on the drive data, the cumulated angular distance that has been travelled by the tool since start of operation of the tool (as outlined above). Furthermore, the control unit may be configured to determine the length information, in particular the length of the food item that has been produced since start of operation of the tool, based on the cumulated angular distance and based on the pre-determined characteristic of the tool (e.g. based on value of L/360° of the tool).

The control unit may be configured to predict the angular distance that the tool will travel subsequent to causing the drive unit to interrupt driving the tool (i.e., subsequent to stopping operation of the drive unit and/or of the tool). The additional angular distance may be caused by the inertia of the tool.

Furthermore, the control unit may be configured to cause the drive unit to interrupt driving the tool in dependence of the predicted angular distance. By doing this, the kitchen appliance may be operated in a particularly precise manner (with respect to length of the produced food item).

The control unit may be configured to, repeatedly, cause the drive unit to interrupt operating the tool for a pre-determined time duration, if the length information indicates that the length of the food item that has been produced since the last start of operation of the tool has reached or will reach the target value. Furthermore, the control unit may be configured to automatically cause the drive unit to restart operating the tool subsequent to the pre-determined time duration. The pre-determined time duration for interrupting operation of the tool may have been determined based on a user input captured by the user interface of the appliance and/or based on a setting of the appliance.

Hence, the control unit may enable the user to repeatedly produce food items having a length that corresponds to the target value in a comfortable and efficient manner.

According to a further aspect, a kitchen appliance is described, wherein the kitchen appliance comprises a control unit as specified in the present document. Furthermore, the kitchen appliance comprises a tool and a drive unit for driving the tool.

According to another aspect, a method for operating a kitchen appliance is described, wherein the kitchen appliance comprises a drive unit (with an electric motor) configured to drive a tool, wherein the tool is configured to produce a food item having a length that increases with increasing duration of the operation of the tool. The method comprises capturing drive data with regard to the drive unit while driving the tool, using one or more sensors, and determining length information with regard to the length of the food item that has been produced by the tool, based on the drive data. Furthermore, the method comprises operating the kitchen appliance in dependence of the length information.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows a block diagram of a kitchen appliance, in particular of a cooking processor;
Figure 1b shows an exemplary drive unit for driving a tool of a kitchen appliance;
Figure 2a shows a tool which is configured to produce a food item with increasing length;
Figure 2b shows an exemplary mapping between drive data and the length of a food item; and
Figure 3 shows a flow chart of an exemplary method for operating a kitchen appliance.

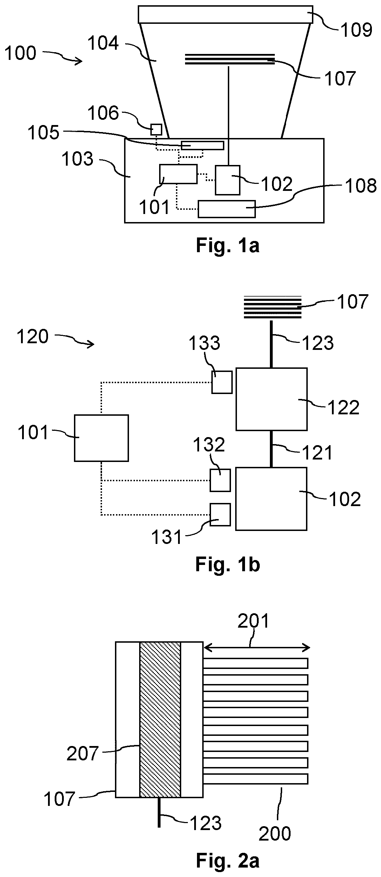

As outlined above, the present document is directed at increasing the comfort-of-use and the precision of the operation of a kitchen appliance. In this context, Fig. 1a shows a block diagram of an exemplary appliance 100 (in particular, a kitchen appliance) which comprises a base unit 103 on which a receptacle 104, in particular a bowl, is placed. The receptacle 104 may be configured to be travelled by a lid 109. The base unit 103 comprises a motor 102 which is configured to drive a tool 107 that is located within the receptacle 104. The tool 107 may be detachable and/or exchangeable. In particular, the appliance 100 may be configured to be used with an arbitrary tool 107 out of a pre-determined set of different tools 107.

The appliance 100 may comprise a heating unit 106 (which may alternatively, or in addition, be integrated into the receptacle 104) for heating the receptacle 104, e.g., for allowing a food item to be cooked within the receptacle 104. Furthermore, the appliance 100 may comprise a temperature sensor 105 which is configured to provide sensor data regarding the temperature of the food item within the receptacle 104. In addition, the appliance 100 may comprise a user interface 108 which allows a user to interact with the appliance 100, e.g., for activating or for deactivating the motor 102. In addition, the appliance 100 may be connected to the internet, to another appliance and/or to a (smart) device via a (wireless) communication interface such as WLAN or Bluetooth. A control unit 101 of the appliance 100 may be configured to operate the appliance 100, in particular the motor 102 and/or the heating unit 106, in dependence of a user input received via the user interface 108 (of the appliance 100 or of a remote device). The user interface 108 may comprise a display for displaying information to the user of the kitchen appliance 100.

Fig. 1b shows further details regarding the drive unit 120 for driving the tool 107, in particular for causing a rotation of the tool 107. The drive unit 120 comprises the (electric) motor 102 which is configured to cause a rotation of a motor shaft 121. Furthermore, the drive unit 120 may comprise a gear unit 122 which is configured to convert the rotation of the motor shaft 121 into a rotation of a tool shaft 123. The gear unit 122 may be configured to adapt the rotational speed of the motor shaft 121 and of the tool shaft 123 by a pre-determined transmission ratio. Typically, the rotational speed of the tool shaft 123 is smaller than the rotational speed of the motor shaft 121. The transmission ratio M may be 2 or more, 5 or more, or 10 or more, such that the rotational speed of the tool shaft 123 is M times smaller than the rotational speed of the motor shaft 121.

The drive unit 120 may comprise a current sensor 131 which is configured to sense the motor current for driving the motor 102. The level/rate of the motor current may be indicative of the mechanical load which is coupled to the motor shaft 121 and/or the tool shaft 123.

Alternatively, or in addition, the drive unit 120 may comprise a position sensor 132 which is configured to capture sensor data with regard to the angular position of the motor shaft 121. The position sensor 132 may comprise a Hall sensor which is configured to capture the strength of a magnetic field. Furthermore, the motor shaft 121 may comprise one or more magnets (at one or more different angular positions around the motor shaft 121). The position sensor 132 may exhibit a pre-determined angular resolution for determining the angular position of the motor shaft 121. By way of example, the angular resolution may be 360° or finer, or 180° or finer, or 90° or finer, or 60° or finer.

Alternatively, or in addition, the drive unit 120 may comprise a position sensor 133 which is configured to capture sensor data with regard to the angular position of the tool shaft 123. The position sensor 133 may comprise a Hall sensor which is configured to capture the strength of a magnetic field. Furthermore, the tool shaft 123 may comprise one or more magnets (at one or more different angular positions around the tool shaft 123). The position sensor 133 may exhibit a pre-determined angular resolution for determining the angular position of the tool shaft 123. By way of example, the angular resolution may be 360° or finer, or 180° or finer.

Fig. 2a illustrates an exemplary tool 107 which is configured to produce a food item having a certain length 201. The tool shaft 123 may rotate the tool 107, notably a component 207 of the tool 107. The tool 107 may have an input side (e.g. at the left side of Fig. 2a) and an output side (e.g. at the right side of Fig. 2a). Food material may be provided at the input side of the tool 107, and the food material may be processed within the tool 107 to provide and/or to produce a food item 200 with increasing length 201 at the output side of the tool 107. The length 201 of the food item 200 may increase continuously as the tool shaft 123 rotates the tool 107, in particular the component 207 of the tool 107. Each full rotation of the tool shaft 123 and/or of the tool 107, i.e. of the component 207 of the tool 107, may lead to an increase of the length 201 of the produced food item 200 at the output side by a predetermined "tool length" L. A fractional rotation of the tool shaft 123 and/or of the tool 107 by X% of the full rotation may lead to an increase of the length 201 of the produced food item 200 by X% of the tool length L, wherein X may be an arbitrary value between 0 and 100.

The tool 107 shown in Fig. 2a is configured to produce tagliatelle as a food item 200 based on a pasta dough which is provided at the input side of the tool 107. A further exemplary tool 107 may be configured to produce a sausage at the output side based on a meat mixture provided at the input side of the tool 107. According to another embodiment, the tool 107 may also be configured to make biscuits (cookies).

Due to the fact that the gear unit 122 typically reduces the rotational speed of the tool shaft 123 with regard to the rotational speed of the motor shaft 121 by a transmission ratio M, a full rotation of the tool shaft 123 corresponds to M rotations of the motor shaft 121. Furthermore, the position sensor 132 for the motor shaft 121 may have a resolution of Q pulses per full rotation of the motor shaft 121, with Q≥1, or Q≥2 or Q≥4 or Q≥6. By consequence, a full rotation of the tool shaft 123 may correspond to Q*M pulses of the position sensor 132 of the motor shaft 121, wherein e.g., Q*M≥100. As a result of this, the pulses of the position sensor 132 of the motor shaft 121 may be used to determine the angular position of the tool shaft 123 in a precise manner (i.e., with a relatively high angular resolution).

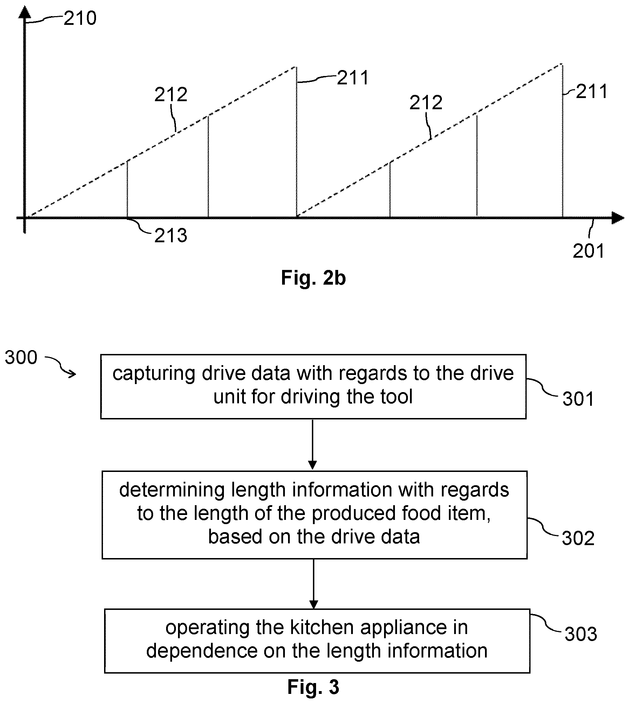

Fig. 2b shows exemplary drive data 210 which is indicative of the position, notably the angular position, of the tool shaft 123. Within a rotation of the tool shaft 123, the angular position of the tool shaft 123 increases from 0° to 360°, which corresponds to the ramp 212 shown in Fig. 2b. Subsequent to a full rotation 211 of the tool shaft 123, the angular position of the tool shaft 123 drops to 0° and starts another ramp 212 up to 360°. As indicated above, the angular position of the tool shaft 123 may be determined with an angular resolution of Q*M different positions per full rotation, i.e. per 360°.

The increase of the angular position of the tool shaft 123 corresponds to an increase of the length 201 of the food item 200 which is produced by the tool 107. A full rotation of the tool shaft 123, i.e. a full ramp 212 of the drive data 210, corresponds to the pre-determined tool length L of the tool 107. On the other hand, a fraction of a full rotation corresponds to a corresponding fraction 213 of the tool length L. Hence, the length 201 of the food item 200 which is produced by the tool 107 of the kitchen appliance 100 may be determined based on the drive data 210 of the drive unit 120 of the kitchen appliance 100.

The user of the kitchen appliance 100 may set a target value for the length of the food item 200 via the user interface 108 of the kitchen appliance 100. The control unit 101 of the kitchen appliance 100 may determine length information with regard to the length 201 of the produced food item 200 based on the drive data 210. Furthermore, the control unit 101 may stop operation of the drive unit 120 in dependence of the length information and in dependence of the target value for the length 201, in particular when the length information indicates that the length 201 of the food item 200 corresponds to the target value. Alternatively, or in addition, an acoustic, optical and/or haptic indication may be output via the user interface 108 of the appliance 100, when the length information indicates that the length 201 of the food item 200 corresponds to the target value.

The user may then remove the food item 200 from the tool 107, e.g., by cutting the food item 200, thereby providing a food item 200 having a length 201 that corresponds to the target value.

The control unit 101 may be configured to operate the tool 107 in a repetitive mode, within which the tool 107 is interrupted each time that the control unit 101 detects that the target value of the length 201 for the food item 200 has been reached. The operation of the tool 107 may be interrupted for a predetermined time duration (e.g. 5 seconds), which allows the user to remove the produced food item 200 from the tool 107. Subsequent to the predetermined time duration of operation of the tool 107 may be resumed to produce another food item 200 having a length 201 that corresponds to the target value. By doing this, a relatively high number of food items 200 having a length 201 that corresponds to the target value may be produced in a sequential manner.

Alternatively, or in addition, the control unit 101 may be configured to output the (value of the) length 201 of the food item 200 which is currently being produced via the user interface 108 of the kitchen appliance 100. By way of example, the length 201 may be indicated on a display of the user interface 108.

The tool 107 may exhibit a certain mechanical inertia when stopping operation of the motor 102. The control unit 101 may be configured to predict the angular distance that the tool 107 will travel, subsequent to interrupting the operation of the motor 102. The angular distance may comprise a multiple of 360° (i.e. of one or more full rotations) and/or a fraction of 360° (i.e. a fraction of a rotation). The angular distance may be predicted based on the rotational speed of the tool 107 and/or based on the load of the motor 102 which is caused by the production of the food item 200.

The predicted angular distance may be used to predict the additional length R of the food item 200, which is produced subsequent to interrupting the operation of the motor 102. If the target value for the length is T, the operation of the motor 102 may be interrupted, once the length 201 of the food item 200 has reached the value T minus R. By doing this, it may be ensured that the target value of the length 201 is reached in a particularly precise manner.

Hence, a kitchen appliance 100 having an automatic length control functionality is described, wherein the functionality controls and/or measures the length 201 of a processed food item 200 during operation of the appliance 100.

The user may be enabled to set the target value for the length 201 of the processed food item 200 (e.g., pasta or sausages or biscuits) via the user interface 108. The appliance 100 may interrupt operation, each time that a produced food item 200 reaches the target value for the length 201. Operation may be interrupted for a pre-determined time duration, and may subsequently restart automatically to produce another food item 200. The pre-determined time duration may be set by the user via the user interface 108. Alternatively, or in addition, an (acoustic and/or optical) signal may be output by the user interface 108 to inform the user that the target value of the length 201 of the food item 200 has been reached. Alternatively, or in addition, the actual value of the length 201 of the food item 200 may be output, notably displayed, via the user interface 108.

The length 201 of a food item 200 may be determined based on the gear rotation and/or based on the motor current. Rotations of the gear may be determined based on the motor speed and/or based on the one or more gear sensors 132, 133. For calculating the gear position and/or the movement of the gear, a sensor 133 on the gear may be used that generates a signal for each full gear rotation and a sensor 132 on the motor shaft 121 may be used. Using this drive data 210, the exact degrees of rotation (i.e., the exact angular position and/or the exact cumulated angular distance) of the tool shaft 123 may be determined. The length 201 of the food item 200 may be determined based on the degrees of rotation (notably based on the cumulated angular distance) and based on the tool-specific relationship (i.e. characteristic) between the degrees of rotation and the length 201 of the food item 200 which is produced by the respective tool 107.

Fig. 3 shows a flow chart of an exemplary (possibly computer-implemented) method 300 for operating a kitchen appliance 100. The method 300 may be executed by a control unit 101 of the kitchen appliance 100. The kitchen appliance 100 comprises a drive unit 120 which is configured to drive a tool 107. In particular, the drive unit 120 may cause the tool 107, notably a component 207 of the tool 107, to rotate. The tool 107 is configured to produce a food item 200 having a certain length 201. The length 201 of the food item 200 may increase continuously as the tool 107 rotates. The kitchen appliance 100 may be configured such that there is a pre-determined relationship and/or characteristic between the cumulated number of rotations of (i.e. the cumulated angular distance travelled by) the tool 107 and the length 201 of the food item 200 that has been produced by the tool 107.

The method 300 comprises capturing 301 drive data 210 with regard to the drive unit 120 while driving the tool 107 (i.e., while causing a rotation of the tool 107), using one or more sensors 131, 132, 133. The drive data 210 may be indicative of the position of a shaft 121, 123 of the drive unit 120 (as a function of time).

Furthermore, the method 300 comprises determining 302 length information with regard to the length 201 of the food item 200 that has been produced by the tool 107 (since the start of operation of the tool 107), based on the drive data 210.

The method 300 further comprises operating 303 the kitchen appliance 100 in dependence of the length information. In particular, the length information, notably the length 201 of the produced foot item 200, may be displayed on a display of the user interface 108 of the kitchen appliance 100. Alternatively, or in addition, the operation of the tool 107 may be stopped automatically in dependence of the length information, in particular, in dependence of the length 201 of the produced food item 200.

By operating a kitchen appliance 100 in dependence of length information, the comfort-of-use and/or the efficiency of the kitchen appliance 100 may be increased.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control unit (101) for a kitchen appliance (100); wherein the kitchen appliance (100) comprises a drive unit (120) configured to drive a tool (107); wherein the tool (107) is configured to produce a food item (200) having a length (201) that progressively increases during operation of the tool (107); wherein the control unit (101) is configured to
- capture drive data (210) with regard to the drive unit (120) while driving the tool (107), using one or more sensors (131, 132, 133);
- determine length information with regard to the length (201) of the food item (200) produced by the tool (107) based on the drive data (210); and
- operate the kitchen appliance (100) in dependence of the length information.

2. The control unit (101) of claim 1, wherein
- the drive unit (120) is configured to drive a rotation of the tool (107);
- the tool (107) is configured to increase the length (201) of the food item (201) by a pre-determined tool length within a rotation of the tool (107);
- the one or more sensors (131, 132, 133) are configured to capture drive data (201) which is indicative of a number of rotations of the tool (107), which are caused by the drive unit (120).

3. The control unit (101) of claim 2, wherein the control unit (101) is configured to increase the length (201) of the food item (200) by the tool length for each full rotation of the tool (107) indicated by the drive data (210).

4. The control unit (101) of any of claims 2 to 3, wherein the control unit (101) is configured to capture the drive data (210) using
- a position sensor (132) of a motor shaft (121) which is driven by a motor (102) of the drive unit (120), and/or
- a position sensor (133) of a tool shaft (123) of the tool (107), which is driven by the motor shaft (121) via a gear unit (122).

5. The control unit (101) of claim 4, wherein
- the position sensor (132) of the motor shaft (121) has an angular resolution with regard to a rotation of the motor shaft (121), which is 10° or finer; and/or
- the gear unit (122) exhibits a transmission ratio of M, with M>1.

6. The control unit (101) of any previous claims, wherein the control unit (101) is configured to
- determine, based on the drive data (210), a cumulated angular distance that has been travelled by the tool (107) since start of operation of the tool (107);
- determine the length information, in particular the length (201) of the food item (200) that has been produced since start of operation of the tool (107), based on the cumulated angular distance and based on a pre-determined tool-dependent characteristic indicating the increase in length (201) of a food item (200) which is caused by a given increase of the angular distance travelled by the tool (107).

7. The control unit (101) of claim 6, wherein
- the control unit (101) is configured to determine the cumulated angular distance with an angular resolution of 10° or finer, in particular of 2° or finer; and/or
- the control unit (101) is configured to determine the cumulated angular distance based on
- sensor data of a position sensor (133) of a tool shaft (123) of the tool (107), which indicates each full rotation of the tool (107); and
- sensor data of a position sensor (132) of a motor shaft (121) which is driven by a motor (102) of the drive unit (120) and which drives the tool shaft (123) via a gear unit (122) having a transmission ratio of M, with M>1.

8. The control unit (101) of any previous claims, wherein the control unit (101) is configured to output the length (201) of the food item (200) via a user interface (108) of the kitchen appliance (100).

9. The control unit (101) of any previous claims, wherein the control unit (101) is configured to
- determine a target value for the length (201) of the food item (200) which is to be produced; and
- cause the drive unit (120) to interrupt operating the tool (107) in dependence of the length information and in dependence of the target value, in particular if the length information indicates that the target value of the length (201) of the produced food item (200) has been or will be reached.

10. The control unit (101) of claim 9, wherein the control unit (101) is configured to, repeatedly,
- cause the drive unit (120) to interrupt operating the tool (107) for a pre-determined time duration, if the length information indicates that the length (201) of the food item (200) that has been produced since the last start of operation of the tool (107) has reached or will reach the target value; and
- automatically cause the drive unit (120) to restart operating the tool (107) subsequent to the pre-determined time duration.

11. The control unit (101) of claim 10, wherein the control unit (101) is configured to determine the target value for the length (201) of the food item (200) and/or the pre-determined time duration for interrupting operation of the tool (107) based on a user input captured by a user interface (108) of the appliance (100) and/or based on a setting of the appliance (100).

12. The control unit (101) of any previous claims, wherein the control unit (101) is configured to
- predict an angular distance that the tool (107) will travel subsequent to causing the drive unit (120) to interrupt driving the tool (107); and
- cause the drive unit (120) to interrupt driving the tool (107) in dependence of the predicted angular distance.

13. A kitchen appliance (100) comprising
- a tool (107); wherein the tool (107) is configured to produce a food item (200) having a length (201) that progressively increases during operation of the tool (107);
- a drive unit (120) for driving the tool (107); and
- a control unit (101) according to any of the previous claims.

14. A method (300) for operating a kitchen appliance (100); wherein the kitchen appliance (100) comprises a drive unit (120) configured to drive a tool (107); wherein the tool (107) is configured to produce a food item (200) having a length (201) that progressively increases during operation of the tool (107); wherein the method (300) comprises,
- capturing (301) drive data (210) with regard to the drive unit (120) while driving the tool (107), using one or more sensors (131, 132, 133);
- determining (302) length information with regard to the length (201) of the food item (200) produced by the tool (107) based on the drive data (210); and
- operating (303) the kitchen appliance (100) in dependence of the length information.
